(19) Europäisches Patentamt
European Patent Office
Office européen des brevets

(11) **EP 4 312 196 A1**

(12) **EUROPEAN PATENT APPLICATION**

(43) Date of publication:
**31.01.2024 Bulletin 2024/05**

(21) Application number: **23165540.8**

(22) Date of filing: **30.03.2023**

(51) International Patent Classification (IPC):
**G06V 10/774** (2022.01)    **G06T 11/00** (2006.01)
**G06V 20/56** (2022.01)

(52) Cooperative Patent Classification (CPC):
**G06V 10/774; G06T 11/00; G06V 20/56**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.07.2022 CN 202210889844**

(71) Applicant: **Shanghai Lichi Semiconductors Ltd. Shanghai (CN)**

(72) Inventor: **LI, Hongjie
Shanghai (CN)**

(74) Representative: **Ziebig Hengelhaupt Intellectual Property Attorneys
Patentanwaltskanzlei PartGmbB
Leipziger Straße 49
10117 Berlin (DE)**

(54) **TARGET DETECTION METHOD, TARGET DETECTION MODEL TRAINING METHOD, AND DEVICE**

(57) A target detection method includes inputting a to-be-detected image into a backbone included in a target detection model to determine that an output of the backbone is a feature corresponding to the to-be-detected image and inputting the feature corresponding to the to-be-detected image into a prediction head included in the target detection model to determine that an output of the prediction head is target information included in the to-be-detected image. The target information included in the to-be-detected image includes at least one of position information, size information, orientation information, depth information, or blocking information of a target in the to-be-detected image. The target detection model is trained and obtained based on a sample image including a target sub-area and a non-target sub-area.

Input the to-be-detected image into a backbone that is included in the target detection model to determine that the output of the backbone is a feature corresponding to the to-be-detected image — S101

Input the feature corresponding to the to-be-detected image into a prediction head included in the object detection model to determine that the output of the prediction head is the target information included in the to-be-detected image — S102

FIG. 1

EP 4 312 196 A1

**Description**

**CROSS-REFERENCE TO RELATED APPLICATION**

The present disclosure claims priority to Chinese Patent Application No. 202210889844.0, filed on July 27, 2022, the entire content of which is incorporated herein by reference.

**TECHNICAL FIELD**

The present disclosure generally relates to the image processing technology field and, more particularly, to a target detection method, a target detection model training method, and a device.

**BACKGROUND**

Target detection refers to a technology to recognize a target (or object) from image data. According to a spatial dimension of an output result, the target detection is classified into 2D detection and 3D detection. For monocular 3D target detection, a model needs to be trained with a large number of 2D images and 3D annotations first. However, due to the complexity of an actual scene and the high cost, it is difficult to collect the large number of 2D images and 3D annotations. Moreover, irrationality and flaws exist in spliced and synthesized 2D images and 3D annotations in a later stage, which will affect a model training result.

**SUMMARY**

To solve the defects in the existing technology, the present disclosure provides a target detection method, target detection model training method, and device, the target information of the image can be sufficiently used to improve the rationality of the sample image to further improve the accuracy of the target detection model trained and obtained based on the sample image.

To achieve the above purpose, one aspect of the present disclosure provides a target detection method, comprising:

Inputting a to-be-detected image into a backbone included in a target detection model to determine that an output of the backbone is a feature corresponding to the to-be-detected image;

Inputting the feature corresponding to the to-be-detected image into a prediction head included in the target detection model to determine that an output of the prediction head is target information included in the to-be-detected image; wherein:

The target information included in the to-be-detected image includes at least one of position information, size information, orientation information, depth information, or blocking information of a target in the to-be-detected image; and

The target detection model is trained and obtained based on a sample image including a target sub-area and a non-target sub-area.

Another aspect of the present disclosure provides a target detection model training method comprising:

Pasting a target sub-area including a target and a non-target sub-area not including the target into a first image to generate a first sample image;

Inputting the first sample image into a backbone included in a target detection model to determine that an output of the backbone is a feature corresponding to the first sample image;

Inputting the feature corresponding to the first sample image into a prediction head included in the target detection model to determine a first sub-loss;

Updating parameters of the backbone and the prediction head based on the first sub-loss.

Further, pasting the target sub-area including the target and the non-target sub-area not including the target into the first image to generate the first sample image comprises:

Based on depth information of the target sub-area and the non-target sub-area, pasting the target sub-area and the non-target sub-area to an area corresponding to the depth information in the first image, and determining a pasted image to be the first sample image.

Further, obtaining at least one sub-area corresponding to an original target in the first image;

Keeping or deleting the at least one sub-area based on a predetermined probability;

Pasting the non-target sub-area with consistent depth information to the deleted sub-area in the first image.

Further, pasting the target sub-area including the target and the non-target sub-area not including the target into the first image to generate the first sample image comprises:

Based on a color distribution of the target in a sample set including the first sample image, and a color of the target corresponding to the target sub-area, pasting the target sub-area including the target and the non-target sub-area not including the target to the first image to generate the first sample image.

Further, after updating the parameters of the backbone and the prediction head based on the first sub-loss:

Inputting the feature corresponding to the first sample image into a feature discriminator included in the target detection model to determine a second sub-loss value; and

Updating parameters of the feature discriminator based on the second sub-loss value.

Further, after updating the parameters of the feature discriminator based on the second sub-loss value:

Determining a second sample image;
Inputting the second sample image into the backbone with updated parameters to determine that an output of the backbone is a feature corresponding to the second sample image;
Inputting the feature corresponding to the second sample image into the prediction head with updated parameters to determine a third sub-loss; and
Updating parameters of the backbone and the prediction head based on the third sub-loss.

Further, after updating the parameters of the backbone and the prediction head based on the third sub-loss:

Inputting the feature corresponding to the second sample image into the feature discriminator with updated parameters to determine a fourth sub-loss;
Updating the parameters of the feature discriminator based on the fourth sub-loss; and
Training repeatedly the backbone, the prediction head, and the feature discriminator.
Further, the first sub-loss includes a minimal loss function corresponding to the backbone and the prediction head;
The second sub-loss is determined based on an output of the feature discriminator after a natural pixel is inputted into the backbone, in response to the output of the backbone being used as an input of the feature discriminator, and an output of the feature discriminator after a paste pixel is inputted into the backbone, and in response to the output of the backbone being used as an input of the feature discriminator; and
The third sub-loss is determined based on the minimal loss function of the backbone in response to the minimal loss function corresponding to the backbone and the prediction head and the paste pixel being input to the backbone and an output of the feature discriminator after the paste pixel is inputted into the backbone, in response to an output of the backbone being used as an input of the feature discriminator.

Further, determining the second sub-loss based on the output of the feature discriminator after the natural pixel is inputted into the backbone, in response to the output of the backbone being used as the input of the feature discriminator, and the output of the feature discriminator after the paste pixel is inputted into the backbone, in response to the output of the backbone being used as the input of the feature discriminator comprises:

Determining a logarithmic value expectation of the output of the feature discriminator after the natural pixel is inputted into the backbone and in response to the output of the backbone being used as the input of the feature discriminator; and
Performing summation on the logarithmic value expectation and a logarithmic value expectation of the output of the feature discriminator after the paste pixel is inputted into the backbone and in response to the output of the backbone being used as the input of the feature discriminator to determine a summation result as the second sub-loss.
Further, determining the third sub-loss based on the minimal loss function of the backbone in response to inputting the minimal loss function corresponding to the backbone and the prediction head and the paste pixel into the backbone and the output of the feature discriminator after the paste pixel is inputted into the backbone and in response to the output of the backbone being used as the input of the feature discriminator includes: corresponding to the backbone and the prediction head, and when pasting pixels into the backbone;
Determining the minimal loss function of the backbone in response to inputting the minimal loss function corresponding to the backbone and the prediction head and the paste pixel into the backbone; and
Performing summation on the logarithmic value expectation of the output of the feature discriminator to determine the summation result as the third sub-loss.

Another aspect of the present disclosure provides an electronic apparatus comprising:

A processor; and
A memory coupled to the processor and storing an instruction that, when executed by the processor, causes the processor to:
Input a to-be-detected image into a backbone included in a target detection model to determine that an output of the backbone is a feature corresponding to the to-be-detected image; and

Input the feature corresponding to the to-be-detected image into a prediction head included in the target detection model to determine that an output of the prediction head is target information included in the to-be-detected image, wherein:

The target information included in the to-be-detected image includes at least one of position information, size information, orientation information, depth information, or blocking information of a target in the to-be-detected image; and

The target detection model is trained and obtained based on a sample image including a target sub-area and a non-target sub-area; or

Paste a target sub-area including a target and a non-target sub-area not including the target into a first image to generate a first sample image;

Input the first sample image into a backbone included in a target detection model to determine that an output of the backbone is a feature corresponding to the first sample image;

Input the feature corresponding to the first sample image into a prediction head included in the target detection model to determine a first sub-loss;

Update parameters of the backbone and the prediction head based on the first sub-loss.

Further, the processor is further configured to:
Based on depth information of the target sub-area and the non-target sub-area, paste the target sub-area and the non-target sub-area to an area corresponding to the depth information in the first image, and determine a pasted image to be the first sample image.

Further, the processor is further configured to:

Obtain at least one sub-area corresponding to an original target in the first image;

Keep or delete the at least one sub-area based on a predetermined probability;

Paste the non-target sub-area with consistent depth information to the deleted sub-area in the first image.

Further, the processor is further configured to:
Based on a color distribution of the target in a sample set including the first sample image, and color of the target corresponding to the target sub-area, paste the target sub-area including the target and the non-target sub-area not including the target to the first image to generate the first sample image.

Further, the processor is further configured to:

Input the feature corresponding to the first sample image into a feature discriminator included in the target detection model to determine a second sub-loss value; and

Update parameters of the feature discriminator based on the second sub-loss value.

Further, the processor is further configured to:

Determine a second sample image;

Input the second sample image into the backbone with updated parameters to determine that an output of the backbone is a feature corresponding to the second sample image;

Input the feature corresponding to the second sample image into the prediction head with updated parameters to determine a third sub-loss; and

Update parameters of the backbone and the prediction head based on the third sub-loss.

Further, the processor is further configured to:

Input the feature corresponding to the second sample image into the feature discriminator with updated parameters to determine a fourth sub-loss;

Update the parameters of the feature discriminator based on the fourth sub-loss; and train repeatedly the backbone, the prediction head, and the feature discriminator.

Further, the first sub-loss includes a minimal loss function corresponding to the backbone and the prediction head;

The second sub-loss is determined based on an output of the feature discriminator after a natural pixel is inputted into the backbone, in response to the output of the backbone being used as an input of the feature discriminator, and an output of the feature discriminator after a paste pixel is inputted into the backbone, and in response to the output of the backbone being used as an input of the feature discriminator; and

The third sub-loss is determined based on the minimal loss function of the backbone in response to the minimal loss function corresponding to the backbone and the prediction head and the paste pixel being input to the backbone and an output of the feature discriminator after the paste pixel is inputted into the backbone, in response to an output of the backbone being used as an input of the feature discriminator.

Further, the processor is further configured to:

Determine a logarithmic value expectation of the output of the feature discriminator after the natural pixel is inputted into the backbone and in response to the output of the backbone being used as the input of the feature discriminator; and

Perform summation on the logarithmic value expectation and a logarithmic value expectation of the output of the feature discriminator after the paste pixel is inputted into the backbone and in response to the output of the backbone being used as the input of the feature discriminator to determine a summation result as the second sub-loss.

In the target detection method and target detection model training method of the present disclosure, in the model training stage, the first sample image is generated by pasting the target sub-area including the target and the non-target sub-area not including the target into the first image. The first sample image is inputted into the backbone that is included in the target detection model to determine that the output of the backbone is the feature corresponding to the first sample image. The feature corresponding to the first sample image is inputted into the prediction head included in the target detection model to determine the first sub-loss. The parameters of the backbone and the prediction head are updated based on the first sub-loss. In the model reasoning stage, the to-be-detected image is inputted into the backbone included in the target detection model to determine that the output of the backbone is the feature corresponding to the to-be-detected image. The feature corresponding to the to-be-detected image is inputted into the prediction head included in the target detection model to determine the output of the prediction head is the target information included in the to-be-detected image. Thus, training is performed based on the sample image including the target sub-area including the target and the non-target sub-area not including the target to offset the impact of the artificially synthesized image on the training of the target detection model to a certain degree. The target information of the image can be sufficiently used to improve the rationality of the sample image to further improve the accuracy of the target detection model trained and obtained based on the sample image.

The content described in the present disclosure is not intended to identify key or critical features of embodiments of the present disclosure and is not intended to limit the scope of the present disclosure. Other features of the present disclosure are easy to understand through the following specification.

## BRIEF DESCRIPTION OF THE DRAWINGS

The following drawings are merely examples for illustrative purposes according to various disclosed embodiments and are not intended to limit the scope of the present disclosure.

FIG. 1 illustrates a schematic flowchart of a target detection method according to some embodiments of the present disclosure.

FIG. 2 illustrates a schematic flowchart of a target detection model training method according to some embodiments of the present disclosure.

FIG. 3 illustrates a schematic flowchart of another target detection model training method according to some embodiments of the present disclosure.

FIG. 4 illustrates a schematic diagram of generating a sample image according to some embodiments of the present disclosure.

FIG. 5 illustrates a schematic structural diagram of a target detection model according to some embodiments of the present disclosure.

FIG. 6 illustrates a schematic diagram showing a result of a target detection method according to some embodiments of the present disclosure.

FIG. 7 illustrates a schematic diagram showing a result of a target detection method according to some embodiments of the present disclosure.

FIG. 8 illustrates a schematic diagram showing a result of a target detection method according to some embodiments of the present disclosure.

FIG. 9 illustrates a schematic structural diagram of a target detection device according to some embodiments of the present disclosure.

FIG. 10 illustrates a schematic structural diagram of a training device of a target detection model according to some embodiments of the present disclosure.

FIG. 11 illustrates a schematic structural diagram of an electronic apparatus according to some embodiments of the present disclosure.

## DETAILED DESCRIPTION OF THE EMBODIMENTS

In order to make the objectives, technical solutions, and advantages of embodiments of the present disclosure clearer, the technical solutions of embodiments of the present disclosure are described in detail below with reference to the accompanying drawings of embodiments of the present disclosure. All other embodiments obtained by those skilled in the art based on embodiments of the present disclosure without creative efforts shall be within the scope of the present disclosure.

Target detection is a technology for identifying a target (an object) from image data. According to a spatial dimension of an output result, the target detection can be classified into 2D detection and 3D detection. In an autonomous driving scenario, the output result of the 2D target detection technology can lack 3D information of the target required for vehicle decision-making, which can cause the vehicle to fail to make an effective decision or make a wrong decision. Thus, the safety of the vehicle can be negatively affected. Monocular 3D target detection can take 2D images captured by a single camera as input, and detect and recognize a depth (distance), size (length, width, height), orientation, category (person or car, etc.) of an object or obstacle in the 3-dimensional information for the vehicle to make a behavior decision. To perform the monocular 3D target detection, a large number of 2D images and 3D annotations are first required to train a model. However, due to the complexity of the actual scenario and the high cost, it is difficult to collect a large number of 2D images and 3D annotations. Moreover, due to safety and ethical issues, scenarios such as car accidents can be difficult to obtain. Thus, a large amount of 3D data needs to be artificially produced for model training.

For lack of monocular 3D data, the following methods can be adopted by the relevant technology center.

Solution 1: target cutout, i.e., a rectangular area is cut out from a to-be-enhanced image and filled with 0 to generate a new sample image.

Solution 2: Box-MixUp, i.e., a rectangular box including the target object is selected from an image and pasted into another image in a translucent form.

Solution 3: Box-Cut-paste, i.e., a rectangular box including the target object is selected from one image and pasted into another image in an opaque form.

Solution 4: Mosaic-Tile, i.e., a plurality of images are spliced into one image.

Solution 5: Geometric consistent copy-paste, i.e., the target object is extracted from an image by using example segmentation, and the 3D object is projected onto the 2D image by randomly selecting a depth value.

However, in the above solutions, on one hand, semantic information of the background where the target is located is ignored, for example, in solution 5, a vehicle can be pasted in the air. On another hand, during a pasting process, an edge of the rectangular box can be blurred and jagged, which causes the trained model to be not able to be generalized in a validation set including a natural image. The target that is cut out cannot fully be integrated in the new background. Since the target pasted in the new background is not a natural image, the model can learn a feature different from a natural target for the pasted target during the training process. Thus, the generalization ability of the model at the validation set can be weakened. In addition, the cut-out target can be pasted to a background area that has a different depth from the target. Thus, a far target can be pasted to a closer background area, or a closer target can be pasted to a far background area to generate an unreasonable image.

Based on the defects in related technologies, the present disclosure provides a target detection model training method, which can perform semantical segmentation o an image, identify a road surface, a vegetation, and a building to prevent the target from being pasted on the vegetation and building. The background area not including the target (non-target sub-area) can be copied and pasted to the to-be-enhanced image to suppress the model to learn a paste edge. Adversarial training can be introduced to make distributions of features generated by the model for paste pixels and natural pixels the same.

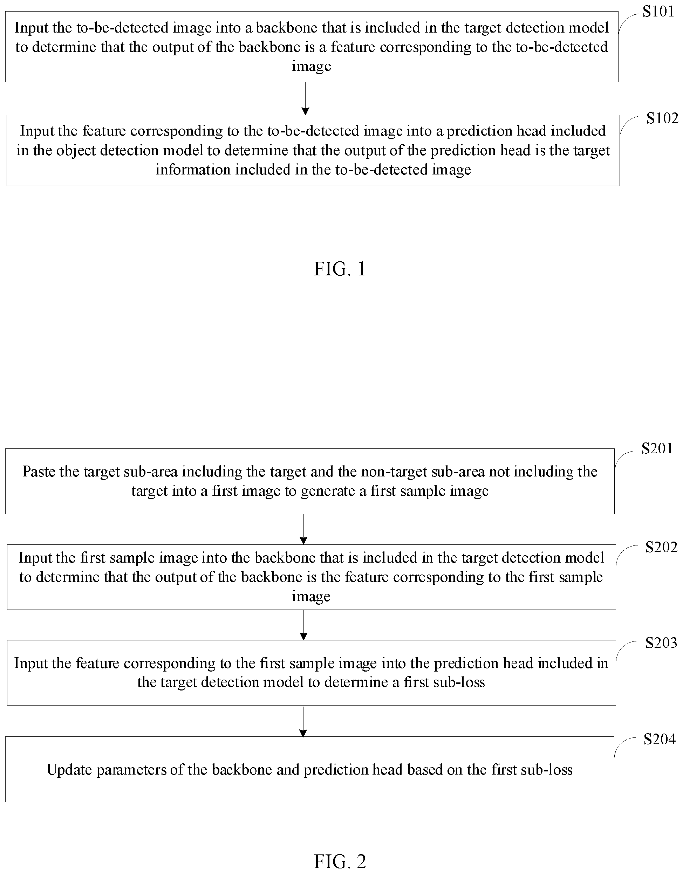

FIG. 1 illustrates a schematic flowchart of a target detection method according to some embodiments of the present disclosure. The method includes the following processes.

At S101, the to-be-detected image is inputted into a backbone included in the target detection model to determine that the output of the backbone is a feature corresponding to the to-be-detected image.

In some embodiments, the target detection model can be obtained by training the sample image including a target sub-area and a non-target sub-area. A detailed training method is described below.

In embodiments of the present disclosure, the method can be applied to a monocular camera scenario. That is, after a monocular camera of the vehicle (or an apparatus with a mobile capability, such as a forklift in a logistics sorting scenario) obtains the to-be-detected image, target information included in the to-be-detected image can be determined based on the target detection model. The target information can be used to notify or indicate a subsequent driving operation. For example, based on the to-be-detected image obtained by the monocular camera, if a travel route of the target is determined to overlap or intersect with a current travel route of the vehicle in the to-be-detected image, the vehicle can be prompted to change routes in advance to avoid.

At S102, the feature corresponding to the to-be-detected image is inputted into a prediction head included in the object detection model to determine that the output of the prediction head is the target information included in the to-be-detected image.

In some embodiments, the target information included in the to-be-detected image can include at least one of position information, size information, orientation information, depth information, or shield information of the target in the to-be-detected image. Thus, the automatic navigation device of the vehicle can be assisted to make a route decision (such as whether to change the route, etc.).

Thus, according to the target detection method of embodiments of the present disclosure, the target detection can be performed on the to-be-detected image by the target detection model, which is trained and obtained based on the sample image including the target sub-area and the non-target sub-area. Thus, the target information of the target in the to-be-detected image can be accurately obtained to support subsequent navigation.

FIG. 2 illustrates a schematic flowchart of a target detection model training method according to some embodiments of the present disclosure. The method includes the following processes.

At S201, the target sub-area including the target and the non-target sub-area not including the target are pasted into a first image to generate a first sample image.

In some embodiments, a target detection model training device (i.e., a device) can be configured to generate a sample set including the first sample image. The device can be configured to, based on the depth information of the target sub-area and the non-target sub-area, paste the target sub-area and the non-target sub-area to an area corresponding to the depth information in the first image, and determine the pasted image as the first sample image. the device can be further configured to delete the area pasted with the target sub-area and the non-target sub-area in the first image.

In some embodiments, the device can be configured to obtain at least one sub-area corresponding to an original target in the first image, keep or delete the at least one sub-area based on a predetermined probability, and paste the non-target sub-area with consistent depth information to the deleted sub-area in the first image. The original target can refer to the target included in the first image when the first image has not been processed. The sub-area corresponding to the original target can be an area enclosed by a contour of the original target, an area enclosed by a contour of a regular shape enclosing the original target with a minimal area (e.g., the area enclosed by sides of a rectangle with the minimal area enclosing the original target, or an area enclosed by the contour of the shape (e.g., a regular shape or irregular shape) enclosing the original target. The predetermined probability can be determined according to actual needs and experiment results.

That is, when the first sample image is generated, the device can be configured to, according to the depth information of the target sub-area and the non-target sub-area, paste the target sub-area and the non-target sub-area to an area in the first image corresponding to the depth information, and delete the corresponding area in the first image. For example, the target sub-area can include A1, A2, and A3. The non-target sub-area can include B1 and B2. Areas in the first image that have the same depth information, shapes, sizes, and areas with the target sub-area and the non-target sub-area can include A1', A2', A3', B1', and B2' in sequence. Thus, the device can be configured to delete A1', A2', A3', B 1', and B2' from the first image and paste A1, A2, A3, B 1, and B2 into the first image to generate the first sample image.

In some embodiments, the device can be further configured to, based on the color distribution of the target in the sample set and the color of the target corresponding to the target sub-area, paste the target sub-area including the target and the non-target sub-area not including the target into the first image to generate the first sample image.

For example, if red cars are relatively few in a sample set. When the target is pasted, a larger probability can be set to change the color of the car to red (color change is performed according to the data distribution in the target color database), or the red car can be directly selected.

In some other embodiments, the device can further be configured to, based on the orientation of the target in the sample set and the orientation of the target corresponding to the target sub-area, paste the target sub-area including the target and the non-target sub-area not including the target in the first image to generate the first sample image.

For example, if targets of a certain orientation are relatively few in the sample set, a larger possibility can be set to select the target of the orientation when the target is selected.

At S202, the first sample image is inputted into the backbone included in the target detection model to determine that the output of the backbone is the feature corresponding to the first sample image.

In some embodiments, the backbone may be a backbone. After the device inputs the first sample image into the backbone, the device can determine that the output of the backbone is the feature of the first sample image. The device can input the feature of the first sample image into a prediction head subsequently to predict the sample image. The device can also input the output of the backbone into a feature discriminator included in the target detection model. Thus, the feature of the sample image output by the backbone can be optimized to cause the feature of the sample image output by the backbone to be closer to the feature of the natural pixel.

In some embodiments, the output of the backbone can be the feature distribution of the first sample image.

Since the first sample image is a synthesized image (a pasted image), the feature distribution can be different from the feature distribution of the natural image (or natural pixel), which can further mislead the training result of the target detection model. In the present disclosure, the feature discriminator is introduced to cause the feature distribution of the image output by the backbone to be closer to the feature distribution of the natural image. Thus, when the natural image is used to perform model reasoning, the output result can be accurate.

At S203, the feature corresponding to the first sample image is inputted into the prediction head that is included in the target detection model to determine a first sub-loss.

In some embodiments, the prediction head can be a prediction head. The first sub-loss can include a minimum loss function corresponding to the backbone and the prediction head.

At S204, the parameters of the backbone and prediction head are updated based on the first sub-loss.

During implementation, the device can fix the parameters of the feature discriminator and input the first sample image into the backbone and the prediction head to determine the first sub-loss, and update the parameters of the backbone and the prediction head based on the first sub-loss. Then, the parameters of the backbone and the prediction head can be set to the updated parameters. The output of the backbone can be input to the feature discriminator (i.e., training the feature discriminator) to determine a second sub-loss, and the parameters of the feature discriminator can be updated based on the second sub-loss.

Further, in process S201, the device can determine the second sample image, determine the parameters of the feature discriminator to be the updated parameters, input the second sample image into the backbone and the prediction head to determine a third sub-loss, and update the parameters of the backbone and the prediction head based on the third sub-loss. Then, the parameters of the backbone and the prediction head can be set as the updated parameter. The output of the backbone can be input into the feature discriminator (i.e., training the feature discriminator) to determine a fourth sub-loss. The parameters of the feature discriminator can be updated based on the fourth sub-loss. The first sample image and the second sample image can be any sample image in the training set.

In some embodiments, the first sub-loss can include the minimum loss function corresponding to the backbone and the prediction head. The second sub-loss can be determined based on the output of the feature discriminator when the natural pixel is inputted and the output of the feature discriminator after the paste pixel is inputted into the backbone, and when the output of the backbone is used as the input of the feature discriminator. The third sub-loss can be determined based on the minimal loss function of the backbone when the minimal loss function corresponding to the backbone and the prediction head and the paste pixel are inputted into the backbone, and the output of the feature discriminator after the paste pixel is inputted into the backbone, and when the output of the backbone is used as the input of the feature discriminator.

During implementation, the device can be configured to determine a logarithmic value expectation of the output of the feature discriminator when the natural pixel is an input. The device can be further configured to perform summation on the logarithmic value expectation of the output of the feature discriminator to determine the summation result as the second sub-loss. The device can be further configured to determine the minimal loss function of the backbone when the minimal loss function corresponding to the backbone and the prediction head, and the paste pixel are inputted into the backbone, and perform the summation on the logarithmic value expectation of the output of the feature discriminator to determine the summation result as the third sub-loss.

As such, the backbone, the prediction head, and the feature discriminator can be repeatedly trained. Then, the target detection model can be verified based on the validation set.

A generation method of the sample image included in the validation set can be the same as process S201, which will not be repeated here. In some embodiments, after a plurality of sample images are generated in process S201, the plurality of sample images can be divided into a training set and a validation set.

The validation process of the target detection model performed by using the validation set can be the same as the training process. The sample images can be inputted into the backbone and the prediction head to obtain a sub-loss value. Then, the output of the backbone can be input to the feature discriminator. Based on the output of the prediction head, the backbone, and the feature discriminator, the loss corresponding to the validation set can be determined. If the loss converges to an expected range, the target detection model training can be determined to be finished. If the loss does not converge to the expected range, process S202 to process S204 can be repeated until the loss corresponding to the validation set converges to the expected range. The expected range can be determined according to an experimental result or actual needs.

Thus, in the target detection model training method of embodiments of the present disclosure, training can be performed based on the sample images of the target sub-area including the target and the non-target sub-area not including the target. The impact of the artificially synthesized image on the training of the target detection model can be offset to a certain degree. In addition, the target information of the image can be sufficiently used to improve the rationality of the sample image to further improve the accuracy of the target detection model obtained through training based on the sample image. Moreover, through the adversarial training of the feature distribution of the natural image and the feature distribution of the synthesized image (i.e., the sample image), the model can be caused to generate the distributions of the features of the paste pixel and the natural pixel to be the same.

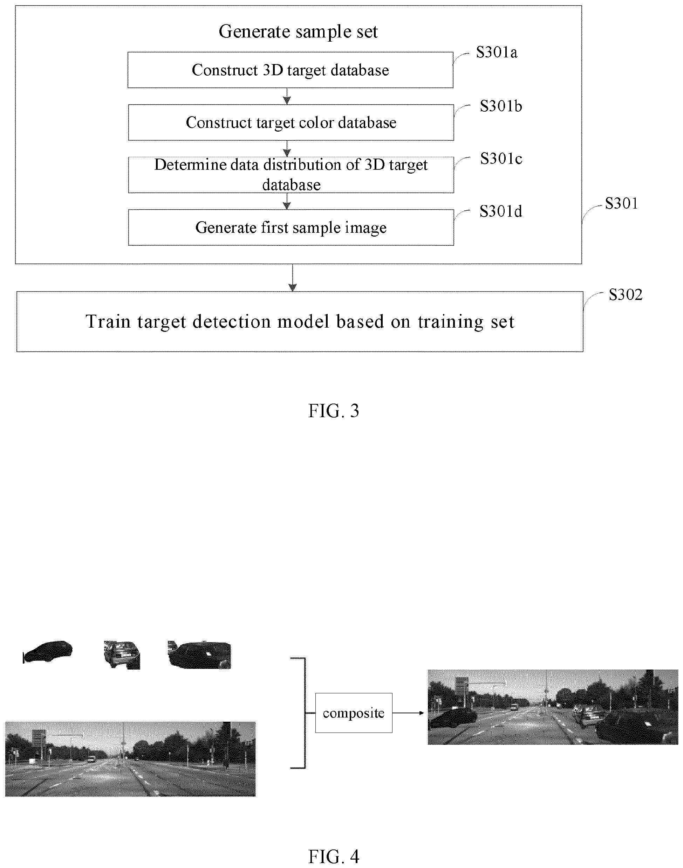

FIG. 3 illustrates a schematic flowchart of another target detection model training method according to some embodiments of the present disclosure. The method includes the following processes.

At S301, a sample set is generated.

In some embodiments, the sample set can be generated based on process S301a to process S301d. Further, the sample set can be divided into a training set and a validation set. The training set can be used to train the target detection model. The validation set can be used to validate the target detection model trained based on the training set.

At S301a, a 3D object database is constructed.

In some embodiments, the target detection model training device (i.e., device) can be configured to extract a 3D target (i.e., the target) from the target detection data set obtained based on the monocular camera (i.e., the camera), save the 3D target in the database, and record data of the target, such as the position coordinates (x, y, z), the orientation of the target (global azimuth and observation angle in the camera coordinate system), the size of the target (length, width, and height), the 2D rectangular frame around the target, and the block degree of the target (i.e., degree of how much the target is blocked by other objects), truncation degree, target category, color, target original picture, camera internal parameter and only including the target segmentation map (can be obtained by example segmentation), point cloud, etc., in the image.

At S301b, a target color database is constructed.

In some embodiments, the device can be configured to determine an HSV color distribution of each target in the sample set or the training set and construct the target color database based on the HSV color distribution of each target.

At S301c, the data distribution of the 3D target database is determined.

In some embodiments, the device can be configured to determine the data distribution of attributes such as position, orientation, size, and depth information of each target in the 3D target database.

At S301d, the first sample image is generated.

In some embodiments, the device can be configured to, based on the semantic segmentation method, recognize the road and ground in the first image. Further, all targets included in the first image can be recognized based on the example segmentation method. The targets in the first image can be kept or eliminated according to a predetermined probability. When eliminating, the background information around the target can be used to cover the area where the target is or cover the area where the target is located based on the 3D target database.

In some other embodiments, the device can also be configured to select a target conforming to the semantic background and depth from the 3D target database, and then paste the target sub-area corresponding to the target to the corresponding position in the first image according to the projection of the 3D position of the target in the 2D image.

When selecting the target, the data distribution of the target attribute in the 3D target database can also be considered. For example, if the red cars are relatively few in the 3D target database, when the target is pasted, a greater probability can be set to change the color of the car to red (the color can be changed according to the data distribution in the target color database), or the red car can be directly selected. If the targets in a certain orientation in the 3D target database are relatively few, when the target is selected, a greater probability can be set to select a target in the orientation.

According to the data distribution of the target attributes in the 3D target database, the depth of the target can be reduced or enlarged. According to the zoomed depth, 2D projection can be performed on the target to calculate the size of the 2D rectangular box. Then, according to the size of the 2D rectangular box, the target segmentation map can be scaled.

FIG. 4 illustrates a schematic diagram of generating a sample image according to some embodiments of the present disclosure. As shown in FIG. 4, the data in the 3D target database is pasted into the first image according to the depth information and the semantics of the first image to generate the first sample image.

At S302, the target detection model is trained based on the training set.

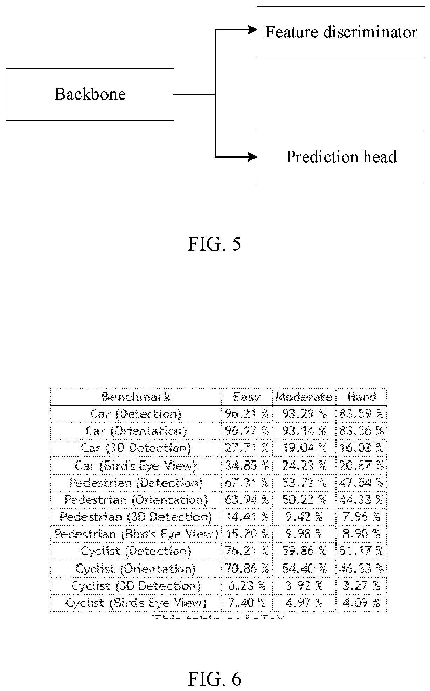

FIG. 5 illustrates a schematic structural diagram of a target detection model according to some embodiments of the present disclosure.

As shown in FIG. 5, the target detection model of embodiments of the present disclosure includes a backbone, a feature discriminator, and a prediction head. The output of the backbone can be the feature distribution of the image, which can be input to the feature discriminator and the prediction head. The backbone can be configured to generate features during the training process. The prediction head can be configured to generate a prediction result using the feature generated by the backbone. The feature discriminator can be configured to determine whether each point on the feature map comes from the natural target or the paste target during the training phase.

The loss function of the model training is determined based on the following formula:

$$L = \min_{G} \max_{D} V(D,G) + \min H$$

$$= E_{x \sim p_{data}(x)}\Big[log\, D(G(x))\Big] + E_{z \sim p_z(z)}\Big[log(1 - D(G(z)))\Big] + minH(G(x)) + minH(G(z))$$

where, D denotes the feature discriminator, G denotes the backbone, $p_{data}$ denotes the distribution generated by the natural pixel (the pixel included in the natural image), $p_z$ denotes the distribution generated by the paste pixel (pixel included in the synthesized image), and H denotes the loss function of a regular 3D target detection model (i.e., the backbone and the prediction head of the present disclosure). Further, when x denotes the natural pixel, D(x) can represent an output of the feature discriminator by using the paste pixel as the input. Further, G(z) represents the output of the backbone when the pasted image is used as the input. D(G(x)) represents the output of the feature discriminator after the paste pixel is inputted into the backbone, and the output of the backbone is used as the input of the feature discriminator. minH(G(x)) represents the minimal loss function of the backbone by taking the natural pixel as the input. minH(G(z)) represents the minimal loss function of the backbone by taking the paste pixel as the input.

In some embodiments, the device can be configured to keep the parameters of the feature discriminator from being updated. First, the backbone and the prediction head can be trained for k1 iterations (steps). k1 can denote a hyperparameter, which can be determined according to actual needs or experimental results. The first sub-loss can be minH (i.e., the minimal loss function corresponding to the backbone and the prediction head, which can also be understood as the minimal loss function of the conventional 3D detection model (the model includes the backbone and the prediction head)). Based on the first sub-loss, the parameters of the backbone and the prediction head can be updated. The parameters of the backbone and the prediction head can be kept from being updated after the update (not being updated during the training of the feature discriminator). The feature discriminator can be trained for k2 steps. k2 can be a hyperparameter, which can be determined according to the actual needs or the experimental results. The maximal expectation (the second sub-loss) can be represented as:

$$E_{x \sim p_{data}(x)}\Big[log\, D(G(x))\Big] + E_{z \sim p_z(z)}\Big[log(1 - D(G(z)))\Big]$$

where, D(G(x)) represents the output of the feature discriminator after the natural pixel is inputted into the backbone, and when the output of the backbone is used as the input of the feature discriminator. D(G(z)) represents the output of the feature discriminator after the paste pixel (i.e., the pixel of the sample image), and when the output of the backbone is used as the input of the feature discriminator. $E_{x \sim pdata\,(x)}[logD(G(x))]$ represents the logarithmic value expectation of the output of the feature discriminator after the natural pixel is inputted into the backbone, and when the output of the backbone is used as the input of the feature discriminator. $E_{z \sim pz(z)}[log(1-D(G(z)))]$ represents the logarithmic value expectation after 1 minus the output of the feature discriminator after the paste pixel is inputted into the backbone, and when the output of the backbone is used as the input of the discriminator.

The parameters of the feature discriminator can be updated based on the second sub-loss. Then, the parameters of the feature discriminator can be kept from being updated (not updated during the training process of the backbone and the prediction head). The backbone and the prediction head can be trained for k3 steps. k3 can be a hyperparameter, which can be determined according to the actual needs or experimental results. The third sub-loss can be represented as:

$$E_{z \sim p_z(z)}\Big[log(D(G(z)))\Big] + minH(G(x)) + minH(G(z))$$

where, $E_{z \sim p_z(z)}[log(D(G(z)))]$ represents the expectation of the logarithmic calculation after the output of the feature discriminator, after the paste pixel is inputted into the backbone, and when the output of the backbone is used as the input of the feature discriminator.

The above process can be repeated. That is, the training set can be first used to train the target detection model. The parameters of the backbone, prediction head, and feature discriminator can be updated during the training process until the training based on all sample images in the training set is completed. Then, the validation set can be used to validate the target detection model with the updated parameters, until the loss $H_{x \sim ptest(x)}(x)$ converges to the expected range (the loss function can be determined to satisfy the first condition based on the third sub-loss and the fourth sub-loss, and the training of the target detection model can be determined to be finished). The target detection model is verified until the loss on the validation set converges to the expected range (the loss function determined based on the third sub-loss and the fourth sub-loss satisfies the first condition, to determine that the target detection model is trained), where $p_{test}$ represents the data distribution of the validation set.

FIG. 6 illustrates a schematic diagram showing a result of a target detection method according to some embodiments of the present disclosure.

As shown in FIG. 6, the model reasoning is performed by the target detection model trained and obtained according to the target detection model training method of embodiments of the present disclosure. The higher is the score MonoInsight of the model in the kitti validation set the better.

In FIG. 6, three columns of scores such as Easy, Moderate, and Hard are included and represent three detection scores under different IOU thresholds, respectively. The higher the score is, the better the detection effect is. A size relationship of the IOU thresholds is Easy<Moderate<Hard.

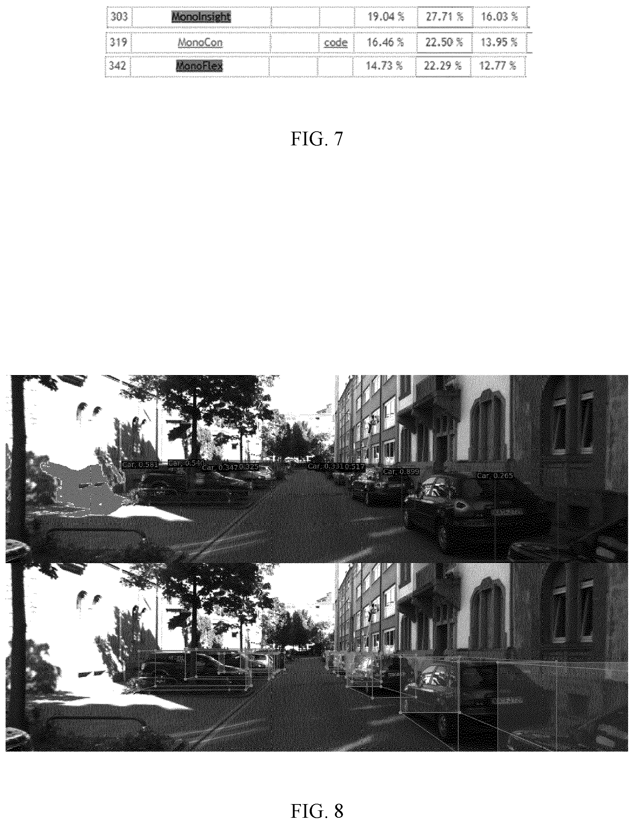

FIG. 7 illustrates a schematic diagram showing a result of a target detection method according to some embodiments of the present disclosure.

In FIG. 7, three columns of scores, such as Moderate, Easy, and Hard, are included from left to right, with the same meaning as the previous picture, and represent three detection scores under different IOU thresholds, respectively. The higher the score, the better the detection effect is. The size relationship of the IOU threshold is Easy<Moderate<Hard.

MonoInsight is the target detection model of the present disclosure and has a score exceeding top-ranked models, such as MonoCon and MonoFlex.

FIG. 8 illustrates a schematic diagram showing a result of a target detection method according to some embodiments of the present disclosure.

As shown in FIG. 8, an upper part is a 2D detection result, and a lower part is a detection result provided by the present disclosure. A plurality of pieces of information about the target can be detected according to the detection result of the present disclosure, such as a distance to the monocular camera, a size, a direction, an orientation, etc. Rich scenario information can be provided for subsequent navigation and assist the navigation to make a more appropriate decision.

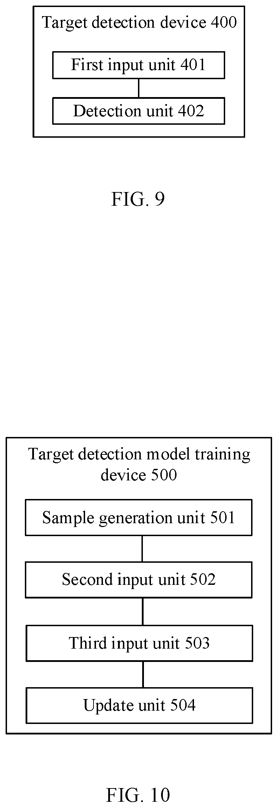

FIG. 9 illustrates a schematic structural diagram of a target detection device according to some embodiments of the present disclosure. The device is described according to the processes.

In some embodiments, the target detection device 400 includes a first input unit 401 and a detection unit 402.

The first input unit 401 can be configured to input the to-be-detected image into the backbone included in the target detection model and determine that the output of the backbone is the feature corresponding to the to-be-detected image.

The detection unit 402 can be configured to input the feature corresponding to the to-be-detected image into the prediction head included in the target detection model and determine that the output of the prediction head is the target information included in the to-be-detected image.

The target information included in the to-be-detected image can include at least one of position information, size information, orientation information, depth information, or blocking information of the target in the to-be-detected image. The target detection model can be trained and obtained based on the sample images including the target sub-area and the non-target sub-area.

FIG. 10 illustrates a schematic structural diagram of a training device of a target detection model according to some embodiments of the present disclosure.

In some embodiments, the object detection model training device 500 includes a sample generation unit 501, a second input unit 502, a third input unit 503, and an update unit 504.

The sample generation unit 501 can be configured to paste the target sub-area including the target and the non-target sub-area not including the target into the first image to generate the first sample image.

The second input unit 502 can be configured to input the first sample image into the backbone included in the target detection model and determine that the output of the backbone is the feature corresponding to the first sample image.

The third input unit 503 can be configured to input the feature corresponding to the first sample image into the prediction head included in the target detection model and determine the first sub-loss.

The updating unit 504 can be configured to update the parameters of the backbone and the prediction head based on the first sub-loss.

In some embodiments, the sample generation unit 501 can be configured to paste the target sub-area and the non-target sub-area into the area of the first image corresponding to the depth information based on the depth information of the target sub-area and the non-target sub-area, and determine the pasted image to be the first sample image.

The sample generation unit 501 can be further configured to obtain at least one sub-area corresponding to the original target in the first image, keep or delete the at least one sub-area based on the predetermined probability, and paste the non-target sub-area with the consistent depth information to the sub-area that is deleted in the first image.

In some embodiments, the sample generation unit 501 can be configured to, based on the color distribution of the target in the sample set including the first sample image, and the color of the target corresponding to the target sub-area, paste the target sub-area including the target and the non-target sub-area not including the target to the first image to generate the first sample image.

The second input unit 502 can be further configured to, after the parameters of the backbone and the prediction head are updated based on the first sub-loss, input the feature corresponding to the first sample image into the feature discriminator included in the target detection model to determine the second sub-loss value and update the parameters of the feature discriminator based on the second sub-loss value.

The sample generation unit 501 can be further configured to determine the second sample image after the parameters of the feature discriminator are updated based on the second sub-loss value.

The second input unit 502 can be further configured to input the second sample image into the backbone with the updated parameters and determine that the output of the backbone is the feature corresponding to the second sample image;

The third input unit 503 can be further configured to input the feature corresponding to the second sample image into the prediction head with the updated parameters, and determine the third sub-loss.

The updating unit 504 can be further configured to update the parameters of the backbone and the prediction head based on the third sub-loss.

The updating unit 504 can be further configured to, after the parameters of the backbone and the prediction head are updated based on the third sub-loss, input the feature corresponding to the second sample image into the feature discriminator with the updated parameters to determine the fourth sub-loss, update the parameters of the feature discriminator based on the fourth sub-loss, and repeatedly train the backbone, the prediction head, and the feature discriminator.

In the above solution, the first sub-loss can include the minimal loss function corresponding to the backbone and the prediction head. The second sub-loss can be determined based on the output of the feature discriminator after the natural pixel is inputted into the backbone, and when the output of the backbone is used as the input of the feature discriminator, and the output of the feature discriminator after the paste pixel is inputted into the backbone, and when the output of the backbone is used as the input of the feature discriminator. The third sub-loss can be determined based on the minimal loss function of the backbone when the minimal loss function corresponding to the backbone and the prediction head and the paste pixel are inputte into the backbone, and the output of the feature discriminator after the paste pixel is inputted into the backbone, and when the output of the backbone is used as the input of the feature discriminator.

In some embodiments, the updating unit 504 can be configured to determine the logarithmic value expectation of the output of the feature discriminator after the natural pixel is inputted into the backbone, and the output of the backbone is used as the input of the feature discriminator. The updating unit can be further configured to perform summation on the logarithmic value expectation of the output of the feature discriminator after the paste pixel is inputted into the backbone, when the output of the backbone is used as the input of the feature discriminator to determine the summation result as the second sub-loss.

In some embodiments, the updating unit 504 can be configured to determine the minimal loss function of the backbone when the minimal loss function corresponding to the backbone and the prediction head and the paste pixel are inputted into the backbone, and perform summation on the logarithmic value expectation of the output of the feature discriminator to determine the summation result as the third sub-loss.

In embodiments of the present disclosure, the present disclosure also provides an electronic apparatus and a readable storage medium.

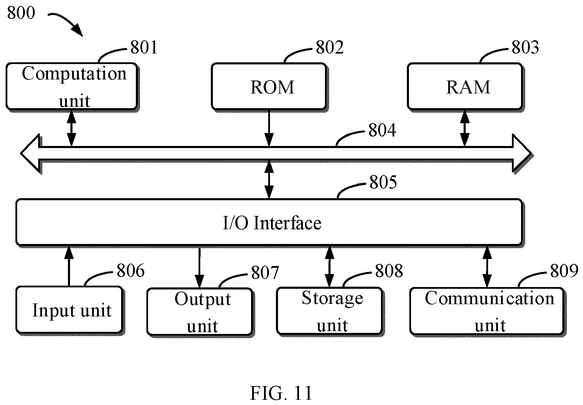

FIG. 11 illustrates a schematic structural diagram of the electronic apparatus 800 according to some embodiments of the present disclosure. The electronic apparatus can include various types of digital computers, such as laptops, desktops, workstations, personal digital assistants, servers, blade servers, mainframes, and other suitable computers. The electronic apparatus can also represent various types of mobile devices, such as personal digital processing, cellular telephones, smartphones, wearable devices, and other similar computing devices. The components, connections and relationships of the components, and functions of the components are merely exemplary and are not intended to limit the disclosure.

As shown in FIG. 11, the electronic apparatus 800 includes a computation unit 801. The computation unit 801 can be configured to perform various suitable actions and processing according to a computer program stored in a read-only memory (ROM) 802 or a computer program loaded into a random access memory (RAM) 803 from a storage unit 808. RAM 803 can also be used to store various programs and data required for the operation of the electronic apparatus 800. The computation unit 801, the ROM 802, and the RAM 803 are connected to each other through a bus 804. Input/output (I/O) interface 805 is also connected to the bus 804.

The plurality of components of the electronic apparatus 800 are connected to the I/O interface 805. The electronic apparatus 800 includes an input unit 806, such as a keyboard, a mouse, etc., an output unit 807, such as various types of displays, speakers, etc., a storage unit 808, such as a magnetic disk, an optical disc, etc., and a communication unit 809, such as a network card, a modem, a wireless communication transceiver, etc. The communication unit 809 can allow the electronic apparatus 800 to exchange information/data with another apparatus through a computer network such as the Internet and/or various telecommunication networks.

The computation unit 801 can include various general and/or special-purpose processing assemblies with

processing and computation capabilities. For example, the computation unit 801 can include, but is not limited to, a central processing unit (CPU), a graphics processing unit (GPU), various dedicated artificial intelligence (AI) computation chips, various computation units of running machine learning model algorithms, a digital signal processor (DSP), and any suitable processor, controller, microcontroller, etc. The computation unit 801 can be configured to perform the various methods and processes described above, such as the object positioning method. For example, in some embodiments, the object positioning method can be implemented as a computer software program, which can be tangibly embodied in a machine-readable medium, such as the storage unit 808. In some embodiments, a part or all of the computer program can be loaded and/or installed onto the apparatus 800 via the ROM 802 and/or the communication unit 809. When the computer program is loaded to the RAM 803 and executed by the computation unit 801, one or more steps of the object positioning method described above can be performed. In some other embodiments, the computation unit 801 can be configured to perform the object positioning method in any other suitable manner (e.g., by firmware).

Various system and technology embodiments described here can be implemented in a digital electronic circuit system, an integrated circuit system, a field programmable gate array (FPGA), an application-specific integrated circuit (ASIC), a dedicated standard product (ASSP), a system on a chip system (SOC), a complex programmable logic device (CPLD), computer hardware, firmware, software, and/or a combination thereof. These various embodiments can be implemented in one or more computer programs. The one or more computer programs can be executed and/or interpreted in a programmable system including at least one programmable processor. The programmable processor can be a dedicated or universal programmable processor, which can receive data and instructions from a storage system, at least one input device, and at least one output device and transmit the data and instructions to the storage system, the at least one input device, and the at least one output device.

The program codes for implementing the method of the present disclosure can be written in any combination of one or more programming languages. These program codes can be provided to a processor or controller of a general-purpose computer, special-purpose computer, or another programmable data processing device. Thus, when the program codes are executed by the processor or the controller, the functions/operations defined in the flowchart and/or block diagram can be implemented. The program codes can be completely executed on the machine or partially executed on the machine. The program codes can also be used as a stand-alone software package that is partially executed on the machine and partially executed on the remote machine or entirely on the remote machine or server.

In the context of the present disclosure, a machine-readable medium can be a tangible medium that can contain or store a program, which can be used by or in connection with an instruction execution system, device, or apparatus. The machine-readable medium can be a machine-readable signal medium or a machine-readable storage medium. The machine-readable medium can include but is not limited to electronic, magnetic, optical, electromagnetic, infrared, or semiconductor systems, devices, or apparatuses, or any suitable combination thereof. More specific examples of the machine-readable storage medium can include an electrical connection based on one or more lines, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage apparatus, a magnetic storage apparatus, or any suitable combination thereof.

To provide interaction with a user, the systems and techniques described here can be implemented on a computer. The computer can include a display device (e.g., a CRT (cathode ray tube) or an LCD (liquid crystal display) monitor) configured to display information to the user, and a keyboard and a pointing device (e.g., a mouse or trackball). The user can provide input to the computer through the keyboard and the pointing device. Another type of device can be configured to provide an interaction with the user. For example, the feedback provided to the user can be any type of sensory feedback (e.g., visual feedback, auditory feedback, or tactile feedback). The input from the user can be received in any form (including acoustic input, voice input, or tactile input).

The systems and techniques described here can be implemented in a computation system including a background component (e.g., used as a data server), or a computation system (e.g., an application server) including a middleware component, or a computation system including a front-end component (e.g., a user computer having a graphical user interface or a web browser, the user can interact with implementations of the systems and techniques described here by the graphical user interface or the web browser), or in any combination of such background components, middleware components, or front-end components. The components of the system can be interconnected by any form or medium of digital data communication (e.g., a communication network). Examples of communication networks can include a local area network (LAN), a wide area network (WAN), and the Internet.

The computer system can include a client end and a server. The client end and the server are generally away from each other and typically interact through a communication network. The client-end-server relationship can be generated by computer programs running on the corresponding computers and having the client-end-server relationship with each other. The server can be a cloud server, a server of a distributed system, or a server incorporating a blockchain.

The steps can be rearranged, increased, or deleted by using the various forms of processes above. For example, the steps described in the present disclosure can be executed in parallel or in a different order, as long as the results expected by the technical solutions disclosed in the present disclosure can be implemented, which is not limited here.

In addition, the terms "first" and "second" are used for descriptive purposes only and cannot be understood as indicating or implying relative importance or implicitly indicating the number of indicated technical features. Thus, the features defined with "first" and "second" can explicitly or implicitly include at least one of the features. In the description of the present disclosure, "a plurality of" means two or more, unless specifically defined otherwise.

The above are merely specific embodiments of the present disclosure. However, the scope of the present disclosure is not limited to this. Those skilled in the art can easily think of modifications or replacements within the technical scope of the present disclosure. The modifications and replacements can be covered within the scope of the present disclosure. Therefore, the scope of the present disclosure shall be subject to the scope of the claims.

**Claims**

1. A target detection method, comprising:

   inputting a to-be-detected image into a backbone included in a target detection model to determine that an output of the backbone is a feature corresponding to the to-be-detected image;
   inputting the feature corresponding to the to-be-detected image into a prediction head included in the target detection model to determine that an output of the prediction head is target information included in the to-be-detected image;
   wherein:

   the target information included in the to-be-detected image includes at least one of position information, size information, orientation information, depth information, or blocking information of a target in the to-be-detected image; and
   the target detection model is trained and obtained based on a sample image including a target sub-area and a non-target sub-area.

2. A target detection model training method comprising:

   pasting a target sub-area including a target and a non-target sub-area not including the target into a first image to generate a first sample image;
   inputting the first sample image into a backbone included in a target detection model to determine that an output of the backbone is a feature corresponding to the first sample image;
   inputting the feature corresponding to the first sample image into a prediction head included in the target detection model to determine a first sub-loss;
   updating parameters of the backbone and the prediction head based on the first sub-loss.

3. The method of claim 2, wherein pasting the target sub-area including the target and the non-target sub-area not including the target into the first image to generate the first sample image includes:
   based on depth information of the target sub-area and the non-target sub-area, pasting the target sub-area and the non-target sub-area to an area corresponding to the depth information in the first image, and determining a pasted image to be the first sample image.

4. The method of claim 3, further comprising:

   obtaining at least one sub-area corresponding to an original target in the first image;
   keeping or deleting the at least one sub-area based on a predetermined probability;
   pasting the non-target sub-area with consistent depth information to the deleted sub-area in the first image.

5. The method of claim 2, wherein pasting the target sub-area including the target and the non-target sub-area not including the target into the first image to generate the first sample image includes:
   based on a color distribution of the target in a sample set including the first sample image, and a color of the target corresponding to the target sub-area, pasting the target sub-area including the target and the non-target sub-area not including the target to the first image to generate the first sample image.

6. The method of claim 2, further comprising, after updating the parameters of the backbone and the prediction head based on the first sub-loss:

inputting the feature corresponding to the first sample image into a feature discriminator included in the target detection model to determine a second sub-loss value; and
updating parameters of the feature discriminator based on the second sub-loss value.

7. The method of claim 6, further comprising, after updating the parameters of the feature discriminator based on the second sub-loss value:

determining a second sample image;
inputting the second sample image into the backbone with updated parameters to determine that an output of the backbone is a feature corresponding to the second sample image;
inputting the feature corresponding to the second sample image into the prediction head with updated parameters to determine a third sub-loss; and
updating parameters of the backbone and the prediction head based on the third sub-loss.

8. The method of claim 7, further comprising, after updating the parameters of the backbone and the prediction head based on the third sub-loss:

inputting the feature corresponding to the second sample image into the feature discriminator with updated parameters to determine a fourth sub-loss;
updating the parameters of the feature discriminator based on the fourth sub-loss; and
training repeatedly the backbone, the prediction head, and the feature discriminator.

9. The method of claim 8, wherein:

the first sub-loss includes a minimal loss function corresponding to the backbone and the prediction head;
the second sub-loss is determined based on an output of the feature discriminator after a natural pixel is inputted into the backbone, in response to the output of the backbone being used as an input of the feature discriminator, and an output of the feature discriminator after a paste pixel is inputted into the backbone, and in response to the output of the backbone being used as an input of the feature discriminator; and
the third sub-loss is determined based on the minimal loss function of the backbone in response to the minimal loss function corresponding to the backbone and the prediction head and the paste pixel being input to the backbone and an output of the feature discriminator after the paste pixel is inputted into the backbone, in response to an output of the backbone being used as an input of the feature discriminator.

10. The method of claim 9, wherein determining the second sub-loss based on the output of the feature discriminator after the natural pixel is inputted into the backbone, in response to the output of the backbone being used as the input of the feature discriminator, and the output of the feature discriminator after the paste pixel is inputted into the backbone, in response to the output of the backbone being used as the input of the feature discriminator includes:

determining a logarithmic value expectation of the output of the feature discriminator after the natural pixel is inputted into the backbone and in response to the output of the backbone being used as the input of the feature discriminator; and
performing summation on the logarithmic value expectation and a logarithmic value expectation of the output of the feature discriminator after the paste pixel is inputted into the backbone and in response to the output of the backbone being used as the input of the feature discriminator to determine a summation result as the second sub-loss.

11. The method of claim 9, wherein determining the third sub-loss based on the minimal loss function of the backbone in response to inputting the minimal loss function corresponding to the backbone and the prediction head and the paste pixel into the backbone and the output of the feature discriminator after the paste pixel is inputted into the backbone and in response to the output of the backbone being used as the input of the feature discriminator includes:
corresponding to the backbone and the prediction head, and when pasting pixels into the backbone,

determining the minimal loss function of the backbone in response to inputting the minimal loss function corresponding to the backbone and the prediction head and the paste pixel into the backbone; and
performing summation on the logarithmic value expectation of the output of the feature discriminator to determine the summation result as the third sub-loss.

**12.** An electronic apparatus comprising:

a processor; and
a memory coupled to the processor and storing an instruction that, when executed by the processor, causes the processor to:

input a to-be-detected image into a backbone included in a target detection model to determine that an output of the backbone is a feature corresponding to the to-be-detected image; and
input the feature corresponding to the to-be-detected image into a prediction head included in the target detection model to determine that an output of the prediction head is target information included in the to-be-detected image, wherein:

the target information included in the to-be-detected image includes at least one of position information, size information, orientation information, depth information, or blocking information of a target in the to-be-detected image; and
the target detection model is trained and obtained based on a sample image including a target sub-area and a non-target sub-area; or

paste a target sub-area including a target and a non-target sub-area not including the target into a first image to generate a first sample image;
input the first sample image into a backbone included in a target detection model to determine that an output of the backbone is a feature corresponding to the first sample image;
input the feature corresponding to the first sample image into a prediction head included in the target detection model to determine a first sub-loss;
update parameters of the backbone and the prediction head based on the first sub-loss.

**13.** The apparatus of claim 12, wherein the processor is further configured to:
based on depth information of the target sub-area and the non-target sub-area, paste the target sub-area and the non-target sub-area to an area corresponding to the depth information in the first image, and determine a pasted image to be the first sample image.

**14.** The apparatus of claim 13, wherein the processor is further configured to:

obtain at least one sub-area corresponding to an original target in the first image;
keep or delete the at least one sub-area based on a predetermined probability;
paste the non-target sub-area with consistent depth information to the deleted sub-area in the first image.

**15.** The apparatus of claim 12, wherein the processor is further configured to:
based on a color distribution of the target in a sample set including the first sample image, and color of the target corresponding to the target sub-area, paste the target sub-area including the target and the non-target sub-area not including the target to the first image to generate the first sample image.

Input the to-be-detected image into a backbone that is included in the target detection model to determine that the output of the backbone is a feature corresponding to the to-be-detected image ⟋ S101

Input the feature corresponding to the to-be-detected image into a prediction head included in the object detection model to determine that the output of the prediction head is the target information included in the to-be-detected image ⟋ S102

FIG. 1

Paste the target sub-area including the target and the non-target sub-area not including the target into a first image to generate a first sample image ⟋ S201

Input the first sample image into the backbone that is included in the target detection model to determine that the output of the backbone is the feature corresponding to the first sample image ⟋ S202

Input the feature corresponding to the first sample image into the prediction head included in the target detection model to determine a first sub-loss ⟋ S203

Update parameters of the backbone and prediction head based on the first sub-loss ⟋ S204

FIG. 2

FIG. 3

FIG. 4

Feature discriminator

Backbone

Prediction head

FIG. 5

| Benchmark | Easy | Moderate | Hard |
|---|---|---|---|
| Car (Detection) | 96.21 % | 93.29 % | 83.59 % |
| Car (Orientation) | 96.17 % | 93.14 % | 83.36 % |
| Car (3D Detection) | 27.71 % | 19.04 % | 16.03 % |
| Car (Bird's Eye View) | 34.85 % | 24.23 % | 20.87 % |
| Pedestrian (Detection) | 67.31 % | 53.72 % | 47.54 % |
| Pedestrian (Orientation) | 63.94 % | 50.22 % | 44.33 % |
| Pedestrian (3D Detection) | 14.41 % | 9.42 % | 7.96 % |
| Pedestrian (Bird's Eye View) | 15.20 % | 9.98 % | 8.90 % |
| Cyclist (Detection) | 76.21 % | 59.86 % | 51.17 % |
| Cyclist (Orientation) | 70.86 % | 54.40 % | 46.33 % |
| Cyclist (3D Detection) | 6.23 % | 3.92 % | 3.27 % |
| Cyclist (Bird's Eye View) | 7.40 % | 4.97 % | 4.09 % |

FIG. 6

| 303 | MonoInsight | | | 19.04 % | 27.71 % | 16.03 % |
|---|---|---|---|---|---|---|
| 319 | MonoCon | | code | 16.46 % | 22.50 % | 13.95 % |
| 342 | MonoFlex | | | 14.73 % | 22.29 % | 12.77 % |

FIG. 7

FIG. 8

Target detection device 400

First input unit 401

Detection unit 402

FIG. 9

Target detection model training device 500

Sample generation unit 501

Second input unit 502

Third input unit 503

Update unit 504

FIG. 10

FIG. 11

Europäisches
Patentamt

European
Patent Office

Office européen
des brevets

## EUROPEAN SEARCH REPORT

**Application Number**

**EP 23 16 5540**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHAOQING REN ET AL: "Faster R-CNN: Towards Real-Time Object Detection with Region Proposal Networks", IEEE TRANSACTIONS ON PATTERN ANALYSIS AND MACHINE INTELLIGENCE, vol. 39, no. 6, 13 September 2015 (2015-09-13), pages 1137-1149, XP055473561, USA ISSN: 0162-8828, DOI: 10.1109/TPAMI.2016.2577031 * abstract * * page 2, fourth paragraph * * page 2, section 3, first paragraph * * page 2, last paragraph * * page 4, second last paragraph * * page 3, last paragraph * * page 4, second last paragraph, first line – page 5, second paragraph, last line * * figure 3 *<br><br>-/-- | 1,3-5, 12-15 | INV.<br>G06V10/774<br>G06T11/00<br>G06V20/56 |
|  |  |  | TECHNICAL FIELDS SEARCHED (IPC)<br><br>G06V<br>G06T |

The present search report has been drawn up for all claims

| Place of search | Date of completion of the search | Examiner |
|---|---|---|
| The Hague | 15 November 2023 | Sagrebin-Mitzel, M |

EPO FORM 1503 03.82 (P04C01)

page 1 of 2

Europäisches
Patentamt

European
Patent Office

Office européen
des brevets

# EUROPEAN SEARCH REPORT

**Application Number**

EP 23 16 5540

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | & ABU ALHAIJA HASSAN ET AL: "Augmented Reality Meets Computer Vision: Efficient Data Generation for Urban Driving Scenes", INTERNATIONAL JOURNAL OF COMPUTER VISION, vol. 126, no. 9, 4 August 2017 (2017-08-04), pages 961-972, XP093101217, New York ISSN: 0920-5691, DOI: 10.1007/s11263-018-1070-x Retrieved from the Internet: URL:https://arxiv.org/pdf/1708.01566.pdf> * abstract * * page 6, right-hand column, forth paragraph * * page 6, right-hand column, section 4.2 * * page 3, right-hand column, section 3, first paragraph and second paragraph * * page 4, left-hand column, third last line - right-hand column, third line * * figure 2 * | 2-5, 12-15 | |
| A | ANTON KONUSHIN ET AL: "Road images augmentation with synthetic traffic signs using neural networks", ARXIV.ORG, CORNELL UNIVERSITY LIBRARY, 201 OLIN LIBRARY CORNELL UNIVERSITY ITHACA, NY 14853, 13 January 2021 (2021-01-13), XP081858521, * the whole document * | 1-15 | TECHNICAL FIELDS SEARCHED (IPC) |

The present search report has been drawn up for all claims

| Place of search | Date of completion of the search | Examiner |
|---|---|---|
| The Hague | 15 November 2023 | Sagrebin-Mitzel, M |

EPO FORM 1503 03.82 (P04C01)

**EP 4 312 196 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210889844